# FASCICULE DE BREVET EUROPEEN

(11) **EP 0 655 398 B1**
(45) Date de publication et mention de la délivrance du brevet: **11.12.1996**
(21) Numéro de dépôt: 94402407.4
(22) Date de dépôt: 26.10.1994
(51) Int. Cl.: B65G 15/32

(54) **Nouvelles bandes transporteuses, notamment pour articles alimentaires**
Förderband, insbesondere für Lebensmittel
Conveyor belt, particularly for food articles

(30) Priorité: 30.11.1993 FR 9314296
(43) Date de publication de la demande: 31.05.1995
(73) Titulaire: ELF ATOCHEM S.A., 92800 Puteaux (FR)
(72) Inventeur: Alex, Patrick, F-91470 Limours Pecquese (FR)
(74) Mandataire: Neel, Henry

(56) Documents cités:
- WO-A-92/10694
- DE-C- 4 128 664
- NFT 50-100, page 20

## Description

L'invention concerne de nouvelles bandes transporteuses, notamment pour articles alimentaires.

Dans de nombreux procédés, il est nécessaire d'amener des articles d'un point à un autre de l'unité, ou de disposer des articles sur une "chaîne" afin de leur faire subir divers traitements ou manipulations. Ainsi, dans le domaine agro-alimentaire par exemple, on utilise les bandes transporteuses.

Dans ce domaine d'activité, les bandes transporteuses doivent posséder les qualités requises de façon générale. Ainsi, on recherche des bandes transporteuses qui présentent une résistance élevée en flexion alternée, résistance élastique, flexibilité, résistance superficielle à diverses agressions et dans diverses conditions, et autres. Les bandes transporteuses doivent être aisées à mettre en place et à changer, tout en ne présentant pas de points faibles, habituellement localisés aux points de jonction. Par ailleurs, dans le domaine agro-alimentaire, la bande transporteuse doit présenter de plus une qualité alimentaire, et résister aux agents tels que graisses, animales ou végétales, et autres, et doit aussi permettre un nettoyage aisé. Enfin, il est avantageux, dans le cas où la bande transporteuse est utilisée en tant que support pour chaîne de travail, de prévoir une décoration, par exemple un dessin sur la bande pour indiquer aux personnes travaillant sur ladite chaîne l'endroit où prendre et/ou mettre l'article, notamment l'article alimentaire.

De nombreux documents mentionnent le tissu ou textile comme âme interne des bandes transporteuses afin de conférer à celles-ci la résistance mécanique requise, ledit textile étant ensuite noyé dans un matériau élastique tel des caoutchoucs. Cependant, de tels textiles sont chers et surtout nécessitent qu'on les recouvrent, notamment avec des polymères appropriés. Le coût de fabrication est donc élevé. Par ailleurs, pour conférer la circularité requise pour les bandes transporteuses, il est nécessaire de superposer les extrémités de la bande, ce qui provoque une surépaisseur locale à la jonction de la bande. Cette surépaisseur occasionne des gênes. Ainsi, EP-A-489 694 décrit une bande transporteuse qui possède une couche interne centrale de textile afin de conférer les propriétés mécaniques requises, cette couche étant recouverte de polymères thermoplastiques élastomères. De tels polymères connus dans l'art des bandes transporteuses est par exemple le polyuréthanne.

Les brevets japonais JP-A-86/307330 et JP-A-86/207813 décrivent des courroies pour transmission de puissance et pour le transport, obtenues à partir de mélanges de polymères. Ces mélanges de polymères sont par exemple des mélanges de polyamides avec des polyéthers, ou des mélanges de polyamides avec des copolymères polyamide/polyéther.

Le brevet US-P-4 979 591 décrit une bande transporteuse pour caisse de grandes surfaces, possédant une surface transparente sous laquelle se trouvent des dessins destinés à de la publicité. Ceux-ci sont appliqués par transfert d'encres, ou sérigraphie, puis sont recouverts par une couche transparente. Ce mode de fabrication nécessite toujours le textile, et implique plusieurs étapes de fabrication.

La demande WO 92/10694 decrit une bande transporteuse comprenant une âme en polyamide et une couche externe de caoutchouc. Il est necessaire d'utiliser une ou deux couches de colle entre le polyamide et le caoutchouc.

De plus, lorsque les bandes transporteuses comprennent des polymères, il est nécessaire que ceux-ci soient compatibles les uns avec les autres, ce qui s'avère souvent difficile compte tenu des objectifs à atteindre; des agents compatibilisant ou des liants sont parfois ajoutés, ce qui augmente la complexité du procédé de fabrication et son coût.

Ainsi, il existe un besoin d'une bande transporteuse, notamment pour le domaine alimentaire qui présente les qualités mécaniques requises pour toute bande transporteuse, ainsi que notamment des caractéristiques spécifiques d'alimentarité liées au domaine agro-alimentaire, qui n'implique pas de sur-épaisseur à la jonction de la bande, et qui puisse, le cas échéant être facilement décorée.

Aucun des documents ci-dessus n'enseigne ni ne suggère la présente invention.

Ainsi, la présente invention fournit une bande transporteuse, comprenant une couche externe de polyamide et une couche interne d'un polymère séquencé.

Ce terme "polymère séquencé" recouvre les polymères thermoplastiques dans lesquels un motif au moins est sous forme de séquences. Les séquences sont par exemple des segments souples tels que des polymèrediols. Des exemples de polymères séquencés entrant dans le cadre de la présente invention sont: polyétherester (Hytrel®), polyuréthanneéther, polyuréthanneester, polyuréthanneétherester, polyétherblockamide (ou aussi dénommé polyétheresteramide), seuls ou en mélange. Le polymère séquencé préféré est le polyétheresteramide (PEEA).

Ainsi, selon un mode de réalisation, dans la bande transporteuse, la couche interne est une couche en polyétheresteramide. Le PEEA présente la formule générale suivante:

HO-[CO-PA-CO-O-PE-O]ₙ-H

dans laquelle PA représente le segment polyamide et PE représente le segment polyéther, n est un entier représentant la répartition des unités récurrentes.

Un exemple de PEEA susceptible d'être utilisé est le PEEA disponible dans le commerce sous la dénomination "Pebax®" et fabriqué par la société ELF ATOCHEM S.A..

Le terme "polyamide" tel qu'utilisé dans la présente invention couvre tout polyamide, homopolymère, copolymère, les mélanges et alliages, dans les proportions connues de l'homme du métier. Des exemples de polyamides sont: PA11, PA12, PA6, PA6,6, PA6,12, PASA (polyamide semi-aromatique), leurs copolymères et leurs mélanges. Par mélange, on entend les mélanges de polyamides avec des charges ou additifs connus de l'homme du métier, en des proportions classiques.

Selon un mode de réalisation, dans la bande transporteuse, la couche externe est à base de polyamide alimentaire.

Par "polyamide alimentaire", on entend un polyamide susceptible d'être utilisé en contact avec de la nourriture, pour animaux ou de préférence pour homme.

Selon une variante, le polyamide alimentaire est du PA11. Le polyamide PA11 est disponible dans le commerce sous la dénomination "Rilsan®", fabriqué par la société ELF ATOCHEM S.A..

Ainsi, lorsque le polyamide présente la qualité alimentaire, la bande transporteuse s'utilise avantageusement dans le domaine alimentaire et/ou agro-alimentaire.

Selon un mode de réalisation préféré, la bande transporteuse est composée d'une couche de PA11 (Rilsan®) et d'une couche de PEEA (Pebax®).

Les couches de la bande transporteuse selon la présente invention présente des épaisseurs variables en fonction de l'utilisation; des épaisseurs habituelles existent cependant.

Selon un mode de réalisation de l'invention, la couche de polyamide possède une épaisseur comprise entre 5 et 500 µm, avantageusement entre 10 et 250 µm, par exemple environ 50 µm.

Selon un autre mode de réalisation, la couche de polymère séquencé possède une épaisseur comprise entre 0,2 et 20 mm, avantageusement entre 0,4 et 10 mm, par exemple environ 2 mm.

La bande selon l'invention peut comprendre d'autres couches additionnelles, telles que des couches textiles, des couches de renfort (Kevlar®, polyester), des filaments, notamment polyester pouvant être incorporés lors de l'extrusion. L'homme du métier appréciera en fonction des conditions d'utilisation l'éventuelle présence de renforts dans la bande selon l'invention.

Grâce à la présente invention, la bande transporteuse possède les propriétés suivantes: d'une part flexibilité, résistance aux flexions alternées, mémoire élastique, faible hystérésis, faible rayon de courbure, légèreté et d'autre part résistance aux agressions par détergents, graisses, huiles, solvants, alimentarité si nécessaire, résistance à l'hydrolyse, résistance à l'abrasion, résistance de surface aux températures élevées, réistance à l'encrassement et autres.

Ainsi, la bande transporteuse selon l'invention peut se souder sur elle-même, grâce à la présence des polymères thermoplastiques constitutifs. La soudure peut être effectuée à chaud ou à haute fréquence, de façon connus dans l'art. Cette soudure "bout-à-bout" permet d'éviter toute surépaisseur notable nuisible. Cette soudure est envisageable selon la technique dénommée en anglais "finger splicing", qui consiste à découper les bords en dents de scie ayant des profils correspondants et s'engageant l'un dans l'autre.

Par ailleurs la bande selon l'invention se nettoie extrêmement bien, car elle évite l'encrassement par dépôt ou la pénétration des salissures.

La bande selon l'invention peut aussi présenter des éléments de décoration, ce qui permet de marquer la bande. Ceci est d'intérêt lorsque la bande est utilisée en tant que support de chaîne, les personnes travaillant devant prendre et remettre l'objet à un endroit précis. Ainsi, il est possible de marquer les contours de l'objet sur la bande transporteuse.

La décoration se fait par toute technique appropriée. Cependant, il est avantageux d'utiliser la technique de décoration par sublimation. Selon cette technique, des pigments sublimables sont déposés à la surface d'un polymère approprié, par exemple du polyamide, puis sous l'effet de la chaleur migre dans l'épaisseur du polymère. Cette technique de décor par sublimation est connue de l'homme du métier; on se réfèrera par exemple au brevet FR-A-2 387 793.

La bande transporteuse est fabriquée par tout procédé connu dans l'art des polymères. De préférence, les bandes sont fabriquées par co-extrusion des constituants dans une filière plate.

Ainsi, l'invention a aussi pour objet cette bande transporteuse, obtenue par co-extrusion de ses constituants.

La bande peut aussi être fabriquée par assemblage de deux films polymères préparés séparément, par toute technique connus dans l'art, telle que le plaxage et autre. La bande transporteuse, ou les couches de polymères la constituant, peut être soumise à un étirage mono- ou bi-dimensionnel. Selon le mode de fabrication envisagé, il est possible d'imprimer un relief sur la couche externe de polyamide qui se prête bien au relief. Ainsi, il est possible d'obtenir un grainage (dénommé en anglais embossing) à la surface extérieure de la bande.

Selon un mode de réalisation de l'invention, la bande transporteuse présente une surface extérieure grainée.

La bande transporteuse est utilisée dans tous les types d'industrie, en particulier l'industrie alimentaire et agro-alimentaire.

## Revendications

1. Bande transporteuse, comprenant une couche externe de polyamide et une couche interne d'un polymère thermoplastique séquencé.

2. Bande transporteuse selon la revendication 1, dans laquelle le polymère séquencé est du polyétheresteramide (PEEA).

3. Bande transporteuse selon la revendication 1 ou 2, dans laquelle le polyamide est un polyamide alimentaire.

4. Bande transporteuse selon la revendication 3, dans laquelle ledit polyamide alimentaire est le Rilsan® (PA11).

5. Bande transporteuse selon l'une quelconque des revendications 1 à 4, dans laquelle la couche de polyamide possède une épaisseur comprise entre 5 et 500 µm, avantageusement entre 10 et 250 µm.

6. Bande transporteuse selon l'une quelconque des revendications 1 à 5, dans laquelle la couche de polymère séquencé possède une épaisseur comprise entre 0,2 et 20 mm, avantageusement entre 0,4 et 10 mm.

7. Bande transporteuse selon l'une quelconque des revendications 1 à 6, présentant en outre une surface extérieure grainée.

8. Bande transporteuse selon l'une quelconque des revendications 1 à 7, susceptible d'etre obtenu par co-extrusion de ses constituants.

## Claims

1. Conveyor belt comprising an outer polyamide layer and an inner layer of a thermoplastic block polymer.

2. Conveyor belt according to Claim 1, in which the block polymer is a polyetheresteramide (PEEA).

3. Conveyor belt according to Claim 1 or 2, in which the polyamide is a food-grade polyamide.

4. Conveyor bolt according to Claim 3, in which the said food-grade polyamide is Rilsan® (PA11).

5. Conveyor belt according to any one of Claims 1 to 4, in which the polyamide layer possesses a thickness of between 5 and 500 µm, advantageously between 10 and 250 µm.

6. Conveyor belt according to any one of Claims 1 to 5, in which the block-polymer layer possesses a thickness of between 0.2 and 20 mm, advantageously between 0.4 and 10 mm.

7. Conveyor belt according to any one of Claims 1 to 6, having, furthermore, an embossed external surface.

8. Conveyor belt according to any one of Claims 1 to 7, capable of being obtained by coextrusion of its constituents.

## Patentansprüche

1. Förderband, das eine Außenschicht aus Polyamid und eine Innenschicht aus einem sequentiellen thermoplastischen Polymer aufweist.

2. Förderband nach Anspruch 1, bei dem das sequentielle Polymer ein Polyetheresteramid (PEEA) ist.

3. Förderband nach Anspruch 1 oder 2, bei dem das Polyamid ein für Lebensmittel geeignetes Polyamid ist.

4. Förderband nach Anspruch 3, bei dem das für Lebensmittel geeignete Polyamid Rilsan® (PA11) ist.

5. Förderband nach einem der Ansprüche 1 bis 4, bei dem die Polyamidschicht eine Dicke von 5 bis 500 µm und vorteilhaft von 10 bis 250 µm aufweist.

6. Förderband nach einem der Ansprüche 1 bis 5, bei dem die Schicht aus dem sequentiellen Polymer eine Dicke von 0,2 bis 20 mm und vorteilhaft von 0,4 bis 10 mm aufweist.

7. Förderband nach einem der Ansprüche 1 bis 6, das ferner eine genarbte Außenoberfläche aufweist.

8. Förderband nach einem der Ansprüche 1 bis 7, erhältlich durch Koextrusion seiner Bestandteile.
